# EUROPÄISCHE PATENTSCHRIFT

(11) **EP 2 512 828 B1**
(45) Veröffentlichungstag und Bekanntmachung des Hinweises auf die Patenterteilung: **04.09.2013**
(21) Anmeldenummer: 10757108.5
(22) Anmeldetag: 27.09.2010
(51) Int. Cl.: B60C 11/04, B60C 11/13

(54) **FAHRZEUGLUFTREIFEN**
VEHICLE PNEUMATIC TYRE
PNEUMATIQUE DE VÉHICULE

(30) Priorität: 17.12.2009 DE 102009059185
(43) Veröffentlichungstag der Anmeldung: 24.10.2012
(73) Patentinhaber: Continental Reifen Deutschland GmbH, 30165 Hannover (DE)
(72) Erfinder: BEHR, Ulrich, 30169 Hannover (DE); FISCHER, Markus, 30823 Garbsen (DE)
(74) Vertreter: Finger, Karsten
(86) Internationale Anmeldenummer: PCT/EP2010/064229
(87) Internationale Veröffentlichungsnummer: WO 2011/072896

(56) Entgegenhaltungen:
- EP-A1- 0 520 755
- EP-A2- 0 153 899
- JP-A- 60 197 409
- US-A- 3 664 402

## Beschreibung

Die Erfindung betrifft einen Fahrzeugluftreifen mit einem Laufstreifen mit durch Umfangsnuten, Quernuten und dergleichen gebildeten Profilelementen, wobei im mittleren Bereich des Laufstreifens eine in Umfangsrichtung umlaufende Profilrippe angeordnet ist, *in welcher eine in Umfangsrichtung umlaufende Umfangsrille angeordnet ist, welche in Zick-Zack-Form verlaufende Randkanten aufweist.*

Ein derartiger Fahrzeugluftreifen ist beispielsweise aus der JP 60 197409 A bekannt, der Laufstreifen dieses Reifens weist mehrere in Umfangsrichtung umlaufende Umfangsrillen in Zick-Zack-Form auf, welche einen Rillengrund mit einer abweichenden Zick-Zack-Form aufweisen, deren Amplitude größer ist als jene der Zick-Zack-Form der Randkanten der Umfangsrillen an der Profiloberfläche. Auf diese Weise sind die Umfangsrillenflanken von Flankenflächen begrenzt, die keine konstante, sondern eine sich in Umfangsrichtung ändernde Neigung aufweisen. Bei einem Reifen mit derartigen Umfangsrillen soll der Laufstreifenabrieb geringer sein. Ein Fahrzeugluftreifen mit einem Laufstreifen mit ähnlich ausgeführten Umfangsrillen ist aus der US 3 664 402 A bekannt. Die EP 0 520 755 A1 offenbart einen Fahrzeugluftreifen mit einem Laufstreifen mit zick-zack-förmig umlaufenden Umfangsrillen, deren Flankenflächen unterschiedlich geneigte Abschnitte aufweisen, um ebenfalls ungleichförmigem Laufstreifenabrieb entgegenzuwirken. Dieser Effekt soll auch mit dem aus der EP 0 153 899 A2 bekannten Fahrzeugluftreifen erzielt werden. Der aus dieser Druckschrift bekannte Fahrzeugluftreifen weist einen Laufstreifen mit mehreren in Umfangsrichtung in Zick-Zack-Form umlaufenden Umfangsnuten auf, die im Bereich der Zick-Zack-Ecken lokal Grundanhebungen aufweisen.

Fahrzeugluftreifen mit Laufstreifen, die im mittleren Bereich eine oder mehrere Profilrippe(n) aufweisen, sind *ebenfalls* in unterschiedlichen Ausführungen bekannt. Ein für Lastkraftwagen vorgesehener Fahrzeugluftreifen mit Profilrippen im mittleren Laufstreifenbereich und Blockreihen in den Schulterbereichen ist aus der US-A-3,858,633 bekannt. Die beiden Profilrippen sind voneinander durch eine breite, entlang des Reifenäquators in Zick-Zack-Form umlaufenden Umfangsrille getrennt, zwei weitere in Zick-Zack-Form umlaufende Umfangsrillen trennen die Profilrippen von den seitlich anschließenden Profilstrukturen. Aus der DE-C-32 02 803 ist ebenfalls ein Fahrzeugluftreifen mit einem Laufstreifen mit mehreren Profilrippen bekannt, welche voneinander durch zick-zack-förmig verlaufende Nuten getrennt sind, deren Flankenflächen unterschiedliche Neigung zur radialen Richtung aufweisen. Die stärker geneigten Flankenflächen befinden sich an jener Nutflanke, die dem benachbarten Laufflächenrand am nächsten liegt. Diese Maßnahme soll das Entformen des vulkanisierten Reifens aus einer mittig geteilten Vulkanisationsform erleichtern. Der aus der WO-A-2008/122455 bekannte Fahrzeugluftreifen für Nutzfahrzeuge weist einen Laufstreifen mit breiten Umfangsnuten auf, welche ebenfalls Profilrippen voneinander trennen und welche von in Umfangsrichtung geradlinig verlaufenden Randkanten begrenzt sind. Die Umfangsnuten weisen einen in Umfangsrichtung zick-zack-förmig verlaufenden Grundabschnitt auf, welcher gemeinsam mit geneigten Flankenflächen pyramidenartige Erhebungen an den Nutflanken bildet. Dadurch soll der Hinauswurf von Steinen aus den Umfangsnuten unterstützt werden.

Bei sportlichen Personenkraftwagen mit Hinterradantrieb ist es wichtig, an der Hinterachse die Antriebskräfte gut auf die Straße übertragen zu können. Aus diesem Grund ist es von Vorteil, an der Hinterachse Reifen zu verwenden, deren Laufstreifen im mittleren Bereich eine massive Profilrippe ohne nennenswerte Strukturierung aufweisen. Diese Profilrippe besitzt somit eine hohe Quer- und Umfangssteifigkeit. Bei intensiver Handling-Beanspruchung oder höherer Fahrgeschwindigkeit besteht die Gefahr der Überhitzung dieser Profilrippe und daher die Gefahr einer Schädigung des Laufstreifengummis.

Der Erfindung liegt somit die Aufgabe zugrunde, durch eine geeignete Maßnahme eine Überhitzung der mittleren Profilrippe im Laufstreifen zu vermeiden, ohne die Quer- und Längssteifigkeit der Profilrippe zu beeinträchtigen.

Gelöst wird die gestellte Aufgabe erfindungsgemäß dadurch, dass *die Randkanten der Umfangsrille einen gegenseitiger Abstand von 2 mm bis 5 mm aufweisen, wobei die Umfangsrille am Rillengrund einen in Zick-Zack-Form verlaufenden, 0,5 mm bis 2,0 mm breiten, von in radialer Richtung und parallel zueinander verlaufenden Flankenflächen begrenzten* Grundabschnitt aufweist, dessen Zick-Zack-Verlauf dem Zick-Zack-Verlauf der Randkanten folgt und dessen Zick-Zack-Abschnitte jedoch sämtlich einen größeren oder einen kleineren Winkel mit der Umfangsrichtung einschließen als die Zick-Zack-Abschnitte der Randkanten, wobei zwischen den Randkanten und dem Grundabschnitt Flankenflächen gebildet sind, welche jeweils sich über die Länge der Zick-Zack-Abschnitte erstrecken.

Die Umfangsrille in der Profilrippe stellt durch ihre spezielle Geometrie eine große Kühloberfläche zur Verfügung, wobei die Quer- und die Umfangssteifigkeit der Profilrippe nahezu uneingeschränkt erhalten bleiben.

Für den Erhalt der Umfangs- und Quersteifigkeit der Profilrippe ist es ferner von Vorteil, wenn der Grundabschnitt eine radiale Erstreckung aufweist, welche 20% bis 50% der Tiefe der Umfangsrille beträgt.

Je nach dem Verlauf des Grundabschnittes wird vorrangig entweder die Umfangssteifigkeit oder die Quersteifigkeit der Profilrippe gering beeinflusst. Eine derartige Einflussnahme ist durch den Zick-Zack-Verlauf des Grundabschnittes möglich, indem die Zick-Zack-Abschnitte des Grundabschnittes entweder zwischen den einspringenden oder zwischen den vorspringenden Randkantenecken verlaufen.

Für die Kühlwirkung ist es von Vorteil, wenn die Tiefe der Umfangsrille zwischen 60% und 80% der Profiltiefe beträgt.

Eine gute Kühlwirkung bei gleichzeitigem Erhalt einer hohen Umfangs- und Quersteifigkeit der Profilrippe lässt sich mit einer Ausführung der Umfangsrille erzielen, bei der die Amplitude des Zick-Zack-Verlaufs der Randkanten 5 mm bis 15 mm beträgt und die aufeinanderfolgenden Ecken im Zick-Zack-Verlauf der Randkanten einen gegenseitigen Abstand von 20 mm bis 100 mm, insbesondere von 30 mm bis 60 mm, aufweisen.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 eine Draufsicht auf einen Abschnitt der Abwicklung eines Laufstreifens eines Fahrzeugluftreifens und
Fig. 2 bis Fig. 4 Schnittdarstellungen entlang der Linien II-II, III-III und IV-IV der Fig. 1.

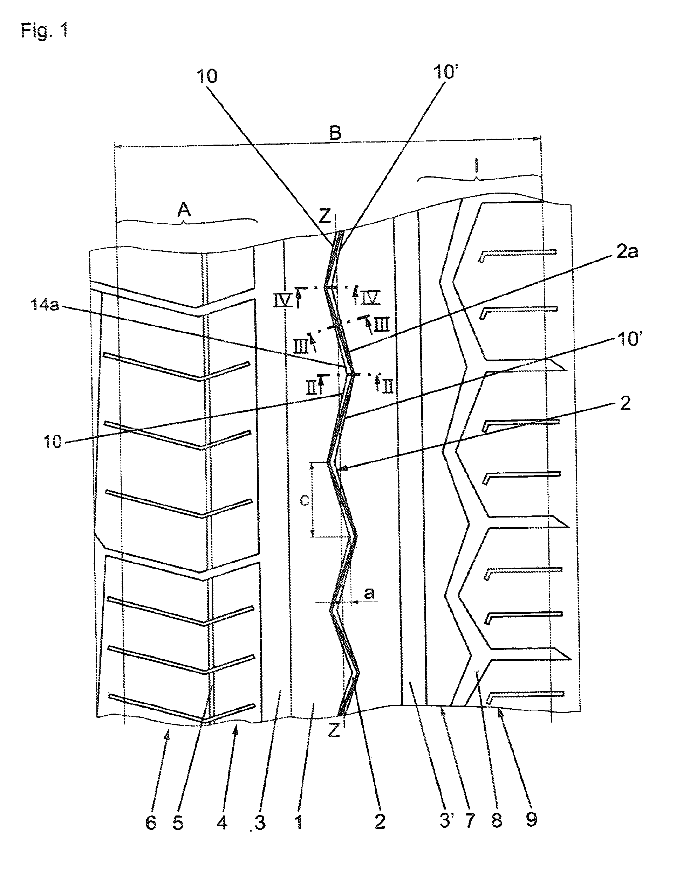

Fig. 1 zeigt einen für PKW-Fahrzeugluftreifen geeigneten profilierten Laufstreifen, welcher ein asymmetrisches Laufstreifenprofil aufweist, bei welchem sich die Profilstrukturen in der einen Laufstreifenhälfte von jenen in der anderen Laufstreifenhälfte derart unterscheiden, dass ein Reifen mit diesem Laufstreifen eine definierte Außenschulter A und eine definierte Innenschulter I aufweist. Bei der Montage des Reifens auf einer Felge ist daher darauf zu achten, dass sich bei am Fahrzeug montierter Felge die Reifenaußenschulter fahrzeugaußenseitig befindet.

Im zentralen Bereich des Laufstreifens befindet sich eine Profilrippe 1, welche eine Breite von 20 bis 25% der Aufstandsflächenbreite B des Laufstreifens bzw. Reifens aufweist und bei der gezeigten Ausführungsform entlang des Reifenäquators Z-Z und symmetrisch zu diesem verläuft und mittig mit einer schmalen, zick-zack-förmig verlaufenden Umfangsrille 2 versehen ist. An die Profilrippe 1 schließen breite, gerade in Umfangsrichtung umlaufende Umfangsnuten 3, 3' an, wobei die Umfangsnut 3 die Profilrippe 1 von einer Blockreihe 4 trennt, welche durch eine weitere, schmälere und in Umfangsrichtung gerade umlaufende Umfangsnut 5 von einer schulterseitig, an der Außenschulter A, befindlichen Blockreihe 6 getrennt ist. An die Umfangsnut 3' grenzt außenseitig eine weitere, schmäler als die Profilrippe 1 ausgeführte Profilrippe 7, welche durch eine breite, in Umfangsrichtung zick-zack-förmig verlaufende Umfangsnut 8 von einer an der Innenschulter I des Laufstreifens bzw. Reifens befindlichen Blockreihe 9 getrennt ist. Auf Details der Ausführung der Blockreihen 4, 6 und 9 sowie der Profilrippe 7 wird nicht eingegangen, da deren Ausgestaltung für die Erfindung nicht von Belang ist.

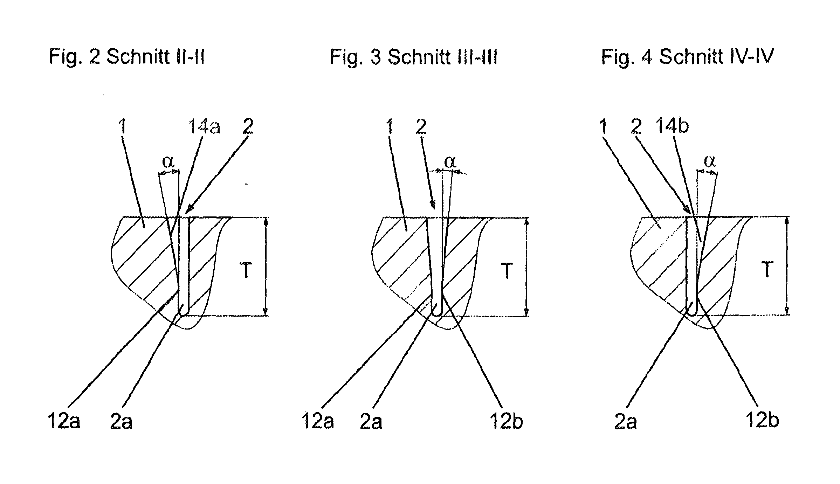

Die im Zentrum der Profilrippe 1 verlaufende Umfangsrille 2 weist an der Profilperipherie zwei parallel zueinander verlaufende, einer Zick-Zack-Form folgende Randkanten 10, 10' auf, deren gegenseitiger Abstand konstant ist und zwischen 2 mm und 5 mm gewählt wird. Die Tiefe T der Umfangsrille 2 beträgt zwischen 60% und 80% der vorgesehenen Profiltiefe, insbesondere ist die Tiefe T der Umfangsrille 2 um mindestens 2 mm geringer als die Profiltiefe. Die Zick-Zack-Form der Randkanten 10, 10' der Umfangsrille 2 ist regelmäßig mit einer vorzugsweise konstant bleibenden Zick-Zack-Amplitude a von 5 mm bis 15 mm und einem in Umfangsrichtung gemessenen Abstand c zwischen aufeinander folgenden Ecken im Zick-Zack-Verlauf von 20 mm bis 100 mm, insbesondere 30 mm bis 50 mm. Wie vor allem die Schnittdarstellungen in Fig. 2 bis Fig. 4 zeigen, ändert sich der Querschnitt der Umfangsrille 2 zwischen den einander benachbarten Ecken im Zick-Zack-Verlauf. Die Umfangsrille 2 weist einen Grundabschnitt 2a auf, welcher einen dem Zick-Zack-Verlauf der Randkanten 10, 10' folgenden Zick-Zack-Verlauf aufweist, eine konstante Breite von 0,5 mm bis 2 mm, eine radiale Erstreckung von 20 bis 50% der Tiefe T der Umfangsrille 2 und im Wesentlichen in radialer Richtung verlaufende Flanken 12a und 12b aufweist. Die Umfangsabschnitte des Grundabschnittes 2a verlaufen jeweils geradlinig und in Draufsicht betrachtet zwischen den in die Profilrippe 1 vorspringenden Ecken der Randkanten 10, 10'. Die Umfangsabschnitte des Grundabschnittes 2a schließen daher mit der Umfangsrichtung einen größeren Winkel ein als die Umfangsabschnitte der Randkanten 10, 10'. Zwischen dem Grundabschnitt 2a und den Randkanten 10, 10' verbleiben in Umfangsrichtung längliche Dreiecke als Flankenflächen 14a und 14b, welche ihren Neigungswinkel α relativ zur radialen Richtung über ihre Umfangserstreckung ändern. Wie insbesondere die Schnittdarstellungen in Fig. 2 bis Fig. 4 zeigen ist der Winkel α an den einspringenden Randkantenecken am größten, etwa in der Größenordnung von 7° bis 15°, und wird zu den vorspringenden Randkantenecken kontinuierlich geringer, bis auf 0°, wie es in Fig. 2 und Fig. 4 gezeigt ist.

Durch diese besondere Ausgestaltung der Umfangsrille 2 weist diese trotz geringer Breite relativ große Flankenflächen 14a, 14b auf, welche zu einer Kühlung des Laufstreifens beitragen, ohne dass die erwünschte hohe Quer- und Längssteifigkeit der Profilrippe 1 beeinträchtigt wird.

Die Erfindung ist auf das dargestellte und beschriebene Ausführungsbeispiel nicht eingeschränkt. Die Profilierung des Laufstreifens kann, bis auf eine Profilrippe im mittleren Bereich, abweichend ausgeführt sein. Der Grundabschnitt 2a in der Umfangsrille 1 kann sich zwischen den einspringenden Randkantenecken erstrecken, sodass die Umfangsabschnitte des Grundabschnittes 2a einen kleineren Winkel mit der Umfangsrichtung einschließen als die Umfangsabschnitte der Randkanten an der Profiloberfläche. Die die Profilrippe begrenzenden Umfangsnuten können eine Zick-Zack-oder Wellenform aufweisen. Die Profilrippe kann ferner mit schmalen Einschnitten und dergleichen versehen sein.

### Bezugszeichenliste

- 1...............: Profilrippe
- 2...............: Umfangsrille
- 3...............: Umfangsnut
- 3' .............: Umfangsnut
- 4...............: Blockreihe
- 5...............: Umfangsnut
- 6...............: Blockreihe
- 7...............: Profilrippe
- 8...............: Umfangsnut
- 9...............: Blockreihe
- 10.............: Randkante
- 10'............: Randkante
- a...............: Amplitude
- c...............: Abstand
- 2a.............: Grundabschnitt
- T ..............: Tiefe
- 12a...........: Flanke
- 12b...........: Flanke
- 14a...........: Flankenfläche
- 14b...........: Flankenfläche

## Patentansprüche

1. Fahrzeugluftreifen mit einem Laufstreifen mit durch Umfangsnuten (3, 3'), Quernuten und dergleichen gebildeten Profilelementen, wobei im mittleren Bereich des Laufstreifens eine in Umfangsrichtung umlaufende Profilrippe (1) angeordnet ist, *in welcher eine in Umfangsrichtung umlaufende Umfangsrille (2) angeordnet ist, welche in Zick-Zack-Form verlaufende Randkanten (10, 10') aufweist*
**dadurch gekennzeichnet,**
**dass** *die Randkanten (10, 10') der Umfangsrille (2) einen gegenseitiger Abstand von 2 mm bis 5 mm aufweisen, wobei die Umfangsrille (2) am Rillengrund einen in Zick-Zack-Form verlaufenden, 0,5 mm bis 2, 0 mm breiten, von in radialer Richtung und parallel zueinander verlaufenden Flankenflächen (12a, 12b) begrenzten* Grundabschnitt (2a) aufweist, dessen Zick-Zack-Verlauf dem Zick-Zack-Verlauf der Randkanten (10, 10') folgt, dessen Zick-Zack-Abschnitte jedoch sämtlich einen größeren oder einen kleineren Winkel mit der Umfangsrichtung einschließen als die Zick-Zack-Abschnitte der Randkanten (10, 10'), wobei zwischen den Randkanten (10, 10') und dem Grundabschnitt (2a) Flankenflächen (14a, 14b) gebildet sind, welche jeweils sich über die Länge der Zick-Zack-Abschnitte erstrecken.

2. Fahrzeugluftreifen nach Anspruch 1, **dadurch gekennzeichnet, dass** der Grundabschnitt (2a) eine radiale Erstreckung aufweist, welche 20% bis 50% der Tiefe (T) der Umfangsrille (2) beträgt.

3. Fahrzeugluftreifen nach Anspruch 1 oder 2, **dadurch gekennzeichnet, dass** sich die Zick-Zack-Abschnitte des Grundabschnittes (2a) geradlinig entweder zwischen den einspringenden oder zwischen den vorspringenden Randkantenecken erstrecken.

4. Fahrzeugluftreifen nach einem der Ansprüche 1 bis 3, **dadurch gekennzeichnet, dass** die Tiefe der Umfangsrille (2) zwischen 60% und 80% der Profiltiefe beträgt.

5. Fahrzeugluftreifen nach einem der Ansprüche 1 bis 4, **dadurch gekennzeichnet, dass** die Amplitude des Zick-Zack-Verlaufs der Randkanten (10, 10') der Umfangsrille (2) 5 mm bis 15 mm beträgt.

6. Fahrzeugluftreifen nach einem der Ansprüche 1 bis 5, **dadurch gekennzeichnet, dass** die aufeinanderfolgenden Ecken im Zick-Zack-Verlauf der Randkanten (10, 10') der Umfangsrille (2) einen gegenseitigen Abstand (c) von 20 mm bis 100 mm, insbesondere von 30 mm bis 60 mm, aufweisen.

## Claims

1. Pneumatic vehicle tyre with a tread rubber comprising profile elements formed by circumferential grooves (3, 3'), transverse grooves and the like, a profile rib (1) which runs around in the circumferential direction being arranged in the central region of the tread rubber and there being arranged in the profile rib a circumferential channel (2), which runs around in the circumferential direction and has peripheral edges (10, 10') running in a zigzag form, **characterized in that** the peripheral edges (10, 10') of the circumferential channel (2) have a distance between them of 2 mm to 5 mm, the circumferential channel (2) having at the base of the channel a base portion (2a), which runs in a zigzag form, is 0.5 mm to 2.0 mm wide, is bounded by flank faces (12a, 12b) running in the radial direction and parallel to one another and the zigzag profile of which follows the zigzag profile of the peripheral edges (10, 10'), the zigzag segments of which however all form a greater or smaller angle with the circumferential direction than the zigzag segments of the peripheral edges (10, 10'), flank faces (14a, 14b) that respectively extend over the length of the zigzag segments being formed between the peripheral edges (10, 10') and the base portion (2a).

2. Pneumatic vehicle tyre according to Claim 1, **characterized in that** the base portion (2a) has a radial extent that is 20% to 50% of the depth (T) of the circumferential channel (2).

3. Pneumatic vehicle tyre according to Claim 1 or 2, **characterized in that** the zigzag segments of the base portion (2a) extend in a straight line either between the recessed corners or between the projecting corners of the peripheral edges.

4. Pneumatic vehicle tyre according to one of Claims 1 to 3, **characterized in that** the depth of the circumferential channel (2) is between 60% and 80% of the profile depth.

5. Pneumatic vehicle tyre according to one of Claims 1 to 4, **characterized in that** the amplitude of the zigzag profile of the peripheral edges (10, 10') of the circumferential channel (2) is 5 mm to 15 mm.

6. Pneumatic vehicle tyre according to one of Claims 1 to 5, **characterized in that** the successive corners in the zigzag profile of the peripheral edges (10, 10') of the circumferential channel (2) have a distance (c) between them of 20 mm to 100 mm, in particular of 30 mm to 60 mm.

## Revendications

1. Pneumatique de véhicule comprenant une bande de roulement avec des éléments profilés formés par des rainures périphériques (3, 3'), des rainures transversales et similaires, une nervure profilée (1) circonférentielle dans la direction périphérique étant disposée dans la région centrale de la bande de roulement, dans laquelle est disposée une gorge périphérique (2) circonférentielle dans la direction périphérique, laquelle présente des arêtes de bord (10, 10') s'étendant en forme de zigzag,
**caractérisé en ce que**
les arêtes de bord (10, 10') de la gorge périphérique (2) présentent un espacement mutuel de 2 mm à 5 mm, la gorge périphérique (2) présentant au niveau de la base de gorge une portion de base (2a) s'étendant en forme de zigzag, de 0,5 mm à 2,0 mm de large, limitée par des faces de flancs (12a, 12b) s'étendant dans la direction radiale et parallèlement l'une à l'autre, dont l'allure en zigzag suit l'allure en zigzag des arêtes de bord (10, 10'), dont les portions en zigzag forment toutefois dans l'ensemble un angle plus grand ou plus petit avec la direction périphérique que les portions en zigzag des arêtes de bord (10, 10'), des faces de flancs (14a, 14b) étant formées entre les arêtes de bord (10, 10') et la portion de base (2a), lesquelles s'étendent à chaque fois sur la longueur des portions en zigzag.

2. Pneumatique de véhicule selon la revendication 1, **caractérisé en ce que** la portion de base (2a) présente une étendue radiale qui représente 20 % à 50 % de la profondeur (T) de la gorge périphérique (2).

3. Pneumatique de véhicule selon la revendication 1 ou 2, **caractérisé en ce que** les portions en zigzag de la portion de base (2a) s'étendent en ligne droite soit entre les coins des arêtes de bord saillant vers l'intérieur, soit entre les coins des arêtes de bord saillant vers l'extérieur.

4. Pneumatique de véhicule selon l'une quelconque des revendications 1 à 3, **caractérisé en ce que** la profondeur de la gorge périphérique (2) est comprise entre 60 % et 80 % de la profondeur du profilé.

5. Pneumatique de véhicule selon l'une quelconque des revendications 1 à 4, **caractérisé en ce que** l'amplitude de l'allure en zigzag des arêtes de bord (10, 10') de la gorge périphérique (2) vaut de 5 mm à 15 mm.

6. Pneumatique de véhicule selon l'une quelconque des revendications 1 à 5, **caractérisé en ce que** les coins successifs dans l'allure en zigzag des arêtes de bord (10, 10') de la gorge périphérique (2) présentent un espacement mutuel (c) de 20 mm à 100 mm, notamment de 30 mm à 60 mm.
